# EUROPEAN PATENT SPECIFICATION

(11) **EP 2 402 596 B1**
(45) Date of publication and mention of the grant of the patent: **20.12.2017**
(21) Application number: 11172065.2
(22) Date of filing: 30.06.2011
(51) Int. Cl.: F03D 7/00, F03D 17/00, F03D 7/02

(54) **Wind turbine blade pitch system**
Verfahren zur Verstellung der Rotorblätter einer Windkraftanlage
Dispositif de réglage du pas de l'hélice pour turbine éolienne

(30) Priority: 30.06.2010 DK 201070304
(43) Date of publication of application: 04.01.2012
(73) Proprietor: Vestas Wind Systems A/S, 8200 Aarhus N (DK)
(72) Inventor: Nielsen, Søren, 8240 Risskov (DK); Nielsen, Jacob, 8830 Tjele (DK); Nielsen, Jens Bredal, 7600 Struer (DK)
(74) Representative: Vestas Patents Department

(56) References cited:
- EP-A1- 2 270 342
- EP-A1- 2 530 305
- EP-A2- 0 266 715
- DD-A1- 119 848
- US-A- 4 487 226

## Description

### Technical field of the invention

The present invention relates to a pitch system for pitching a blade of a wind turbine by means of a hydraulic fluid, comprising a manifold which comprises a hydraulic cylinder for adjusting a pitch angle of the blade and an accumulator hydraulically connected to the cylinder, the hydraulic fluid having at least one measurable property. Furthermore, the invention relates to a method for measuring the property of the hydraulic fluid.

### Background art

In a wind turbine, a hydraulic pitch system is used to control the pitch angle of the rotor blades in order to optimise the wind energy production and to ensure that the rotor blades are not subjected to too large loads when big winds are blowing.

The hydraulic pitch system comprises an accumulator having gas on one side and usually oil on the other side to absorb pulsations and to function as a reservoir for the pump to minimise the pump starts. The accumulators are installed in the hub which is rotated by the rotor blades, whereby the accumulators are subjected to a higher strain than when arranged in a non-rotating structure. Thus, the accumulators in a hydraulic pitch system have a shorter service life than normal accumulators and therefore need to be checked more often. While the accumulators are checked, the wind turbine is brought to standstill, which decreases the production. Furthermore, every stop increases the risk of other elements breaking down since the start/stop procedure puts a heavy load on a number of components. From EP0266715A2, EP2270342A1 and EP2530305A1 wind turbines having hydraulic pitch systems are known.

### Summary of the invention

It is an object of the present invention to wholly or partly overcome the above disadvantages and drawbacks of the prior art and to provide an improved hydraulic pitch system prolonging the service life of the hydraulic accumulators in the pitch system.

The above objects, together with numerous other objects, advantages, and features which will become evident from the below description, are accomplished by a solution in accordance with the present invention, by a pitch system for pitching a blade of a wind turbine by means of a hydraulic fluid, comprising:
- a manifold comprising:
   - a hydraulic cylinder for adjusting a pitch angle of the blade, and
   - an accumulator hydraulically connected to the cylinder,
the hydraulic fluid having at least one measurable property,
wherein the system further comprises a testing unit adapted to measure at least one property of the hydraulic fluid in fluid communication with the accumulator, and a system accumulator which replaces the accumulator of the manifold during measuring of the property in relation to that accumulator of the manifold. Having a testing unit which is in fluid communication with the accumulator makes it possible to determine the state of the accumulator without having to disconnect the accumulator. The fluid coming from the accumulator can be tested, or the testing unit can identify any changes between the fluid delivered to the accumulator and the fluid coming from the accumulator. Thus, the service personnel no longer have to enter the nacelle or hub to visually investigate the accumulators or disconnect the accumulators before testing.

In one embodiment of the invention, the testing unit may comprise a flow constriction means, such as a flow control valve, a throttle, a nozzle, a check valve or the like means.

The flow constriction means causes the pressure drop to occur slowly enough to make it easier to detect a failure in the accumulator.

Furthermore, the testing unit may comprise a timer and/or a fluid tank.

In addition, the testing unit may comprise a control system for monitoring measurements.

The control system evaluates the conducted measurements and sends a signal to the operator and controls the wind turbine on the basis of the test results. Hereby, the wind turbine is stopped if an accumulator does not pass the test.

Moreover, the testing unit may comprise a pressure measuring instrument, such as a pressure gauge or a manometer.

Measuring the pressure drop facilitates detection of any defects in the accumulators.

Additionally, the testing unit may comprise a temperature measuring instrument, such as a hot wire anemometer.

By measuring any temperature increases in the fluid, it becomes possible to detect a defect in an electrical component since a defective electrical component disposes effect and thus heat in the fluid.

Furthermore, the testing unit may comprise a mass control sensor for measuring a mass of the fluid.

In an embodiment of the invention, the hydraulic pitch system may comprise a system accumulator.

By having a system accumulator, the manifold accumulator can be detected without stopping the wind turbine.

Moreover, the control system monitors whether the measurements are within a predetermined parameter range.

Additionally, the control system may have an alarm device for signalling that the measurements are above or below the predetermined parameter range.

In another embodiment, the hydraulic pitch system may further comprise a means for disconnecting the accumulator and connecting another accumulator.

In yet another embodiment, the wind turbine may comprise a plurality of blades, and the hydraulic pitch system may comprise at least one manifold for each blade.

Furthermore, the hydraulic pitch system may comprise one control system for each manifold, measuring the property in a number of conditions, such as varying pressure drops, fluid velocities, etc.

Additionally, the control system may comprise a plotting device.

In an embodiment, the property of the fluid may be pressure, temperature, viscosity, mass or flow.

Furthermore, the testing unit may measure the property during operation of the wind turbine.

Moreover, the hydraulic pitch system may comprise a system accumulator which replaces the accumulator of the manifold during measuring of the property in relation to that accumulator of the manifold.

In addition, the system accumulator may replace a first accumulator of a first manifold during testing of the first manifold accumulator, and the system accumulator may subsequently replace a second accumulator of a second manifold during testing of the second manifold accumulator, and so forth.

Furthermore, the control system may comprise a logging unit for storing the measured data of the property of the fluid in relation to an accumulator.

Additionally, the testing unit may measure the property of the fluid which is connected with the system accumulator.

Moreover, the testing unit may measure the property of the hydraulic fluid in fluid communication with the manifold accumulator during a start-up procedure of the wind turbine.

The present invention also relates to a method for measuring the property of the hydraulic fluid in fluid communication with the manifold accumulator of the hydraulic pitch system as described above, comprising the steps of starting a pump for generating a hydraulic pressure in the hydraulic fluid; building up a pressure in the system until a first predetermined pressure; and measuring an initial first fluid pressure and a second fluid pressure after a predetermined period of draining the accumulator, or measuring a period of time where the fluid pressure drops to a predetermined pressure while the accumulator is being drained.

Finally, the invention relates to a method for measuring the property of the hydraulic fluid in fluid communication with the manifold accumulator of the hydraulic pitch system as described above, comprising the steps of disconnecting a manifold accumulator from the hydraulic system of the manifold during operation of the wind turbine; connecting the system accumulator with the hydraulic system of the manifold; and measuring an initial first fluid pressure and a second fluid pressure after a predetermined period of draining the accumulator, or measuring a period of time where the fluid pressure drops to a predetermined pressure while the accumulator is being drained.

### Brief description of the drawings

The invention and its many advantages will be described in more detail below with reference to the accompanying schematic drawings which, for the purpose of illustration, show some non-limiting embodiments, and in which
Fig. 1 shows a wind turbine comprising a hydraulic pitch system according to the present invention,
Fig. 2 shows a wind turbine hub in which the hydraulic pitch system has been installed,
Fig. 3 shows the hydraulic system comprising the testing unit,
Fig. 4 shows a flow chart of the testing procedure,
Fig. 5 shows one embodiment of a pressure/time test curve, and

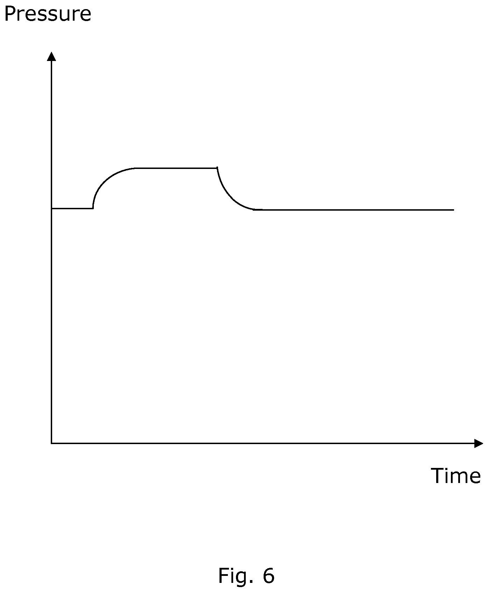

Fig. 6 shows another embodiment of a pressure/time test curve.

All the drawings are schematic and not necessarily to scale, and they show only those parts which are necessary in order to elucidate the invention, other parts being omitted or merely suggested.

### Description of preferred embodiments

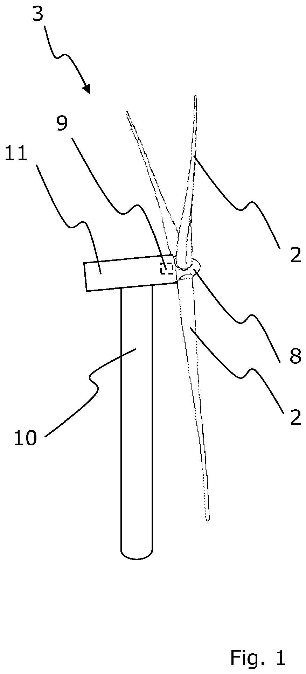

In Fig. 1, a wind turbine 3 having a tower 10, a nacelle 11, a hub 8 and rotor blades 2 is mounted to the hub. Furthermore, the wind turbine 3 comprises a hydraulic pitch system for adjusting the pitch angle of the blades 2 in response to the amount of wind and the wind direction so that no damage occurs in the wind turbine 3. The wind turbine 3 also has a control system 9 arranged in the nacelle 11 for controlling the operation of the wind turbine.

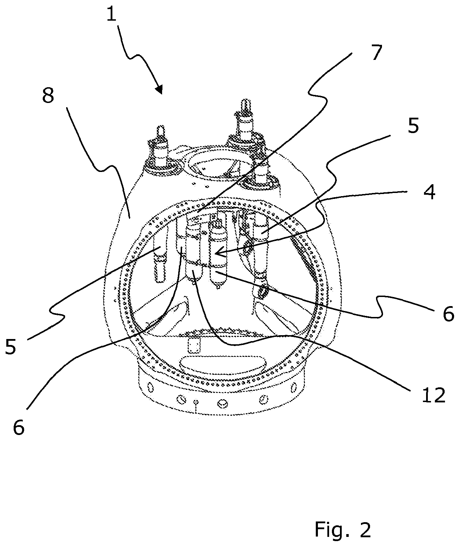

In Fig. 2, the hydraulic pitch system 1 is shown mounted in the hub 8, but the rotor blades 2 have not yet been mounted onto the hub 8. The hydraulic pitch system 1 comprises three manifolds 4, one for each rotor blade. The manifold 4 is the hydraulic system for one rotor blade and comprises a cylinder 5 and an accumulator 6. The cylinder 5 adjusts the pitch angle of the rotor blade 2 in response to wind measurements conducted in another part of the wind turbine 3, and the accumulator 6 absorbs pulsations in the hydraulic system.

Each manifold 4 has a manifold accumulator, and aside from these manifold accumulators, the hydraulic pitch system 1 comprises a common accumulator 12 or a system accumulator. Each manifold 4 comprises a testing unit 7 which is in fluid communication with the accumulator 6 so as to test each manifold accumulator.

By having a common accumulator 12, a manifold accumulator can be tested without stopping the wind turbine 3. Then, the common accumulator 12 or system accumulator steps in and acts as the manifold accumulator which is being tested. In this way, the operating time of the wind turbine 3 is substantially increased and the number of breakdowns in components in the pitch system 1 can be substantially reduced since the operator is able to replace the accumulators before they break. These replacements can thus take place when the wind turbine 3 is stopped due to other repair work, or the replacements can be done by disconnecting the manifold accumulator to be replaced while the common accumulator 12 is connected and functioning as that manifold accumulator.

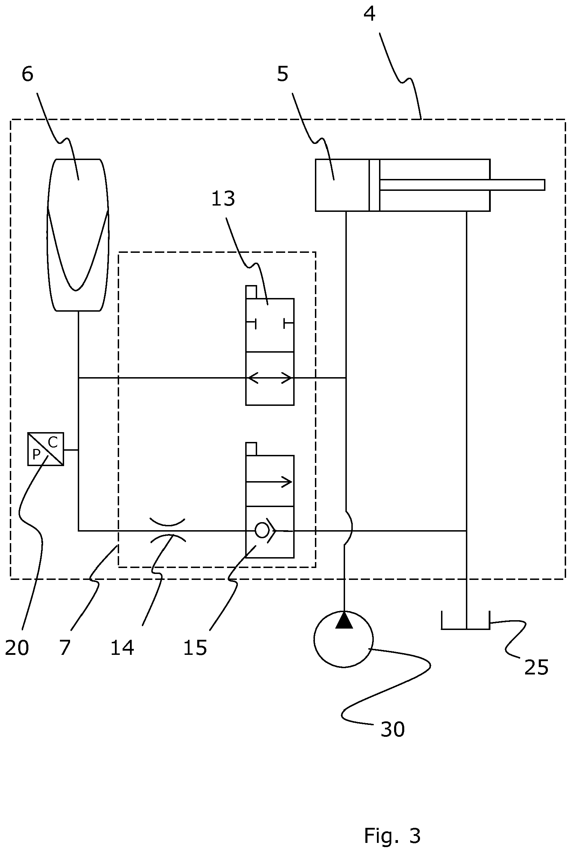

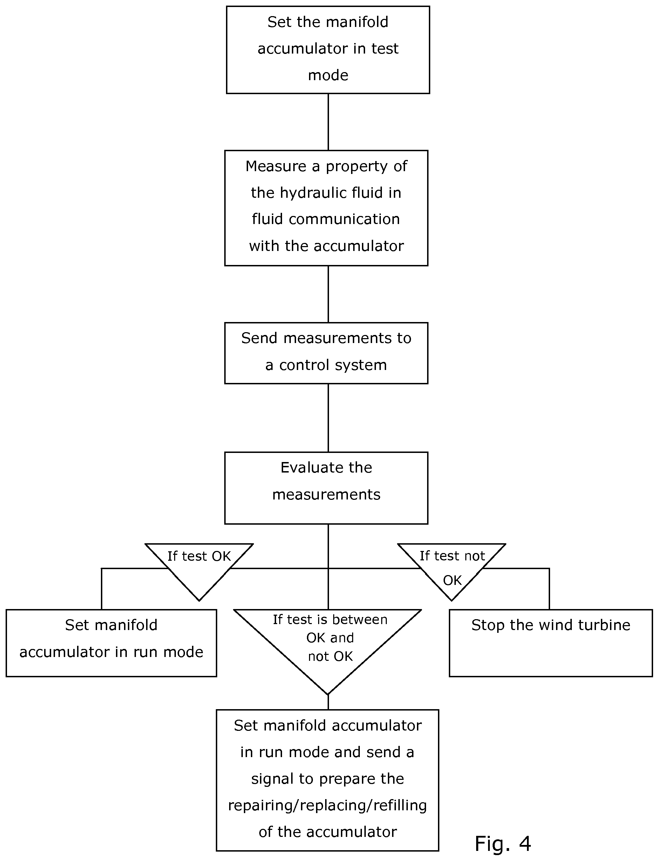

When testing a manifold accumulator, the system accumulator is fluidly connected to the manifold 4, and a valve 13 is actuated to stop the flow to the manifold accumulator, as shown in Fig. 3. The manifold accumulator is set in test mode, as shown in the flow chart of Fig. 4. The testing unit 7 comprises a flow constriction means, such as a flow control valve, a throttle, a nozzle, a check valve or the like means. The testing unit 7 comprises a pressure measuring instrument, such as a pressure transducer 20, to continuously measure the pressure drop in a predetermined time interval or periodically in the same predetermined time interval. The pressure may also simply be measured initially and again when the predetermined time interval has passed. If the pressure drop is too high, i.e. if the pressure is too low when the predetermined time period has passed, the accumulator needs to be replaced. Conversely, if the pressure drop is too low, i.e. if the pressure is too high when the predetermined time period has passed, one of the valves may be defective. If the pressure drop is too high, but not high enough for the accumulator to need replacement, the wind turbine 3 is allowed to operate for a limited period of time. The accumulator then needs to be replaced within that limited time period to avoid the wind turbine 3 being set in STOP mode.

When the manifold accumulator has been tested, it is set in RUN mode if it is allowed to operate. Then, the system accumulator can be used to test another manifold accumulator.

The test results are sent to a control system 9 which may be arranged in the hub 8 or the nacelle 11. The evaluation of the measurements is performed in the control system. If the test results show that the accumulator needs immediate replacement, the control unit 9 sends a signal to the operator that the wind turbine has been stopped and that a certain manifold accumulator needs replacement before the wind turbine can run again. In the same way, the control system notifies the operator that a certain manifold accumulator needs replacement within a limited time period to avoid the wind turbine being set in STOP mode.

The test results are archived in the control system or sent to a central control system for several wind turbines. The measurements made by the testing unit can also be used to predict the use of hydraulic fluid in the hydraulic system.
If the pressure drop is too high, but not high enough for the accumulator to need replacement, an alarm is activated so that the next time an operator enters the wind turbine, he is notified that an accumulator needs maintenance, repair and/or replacement.

When a manifold accumulator has been tested with a positive result, the valve 13 is activated to fluidly connect the manifold accumulator again. The system accumulator is then used instead of a second manifold accumulator in a second manifold. The valve 13 in a second manifold is then activated to fluidly disconnect the second accumulator while testing the same.

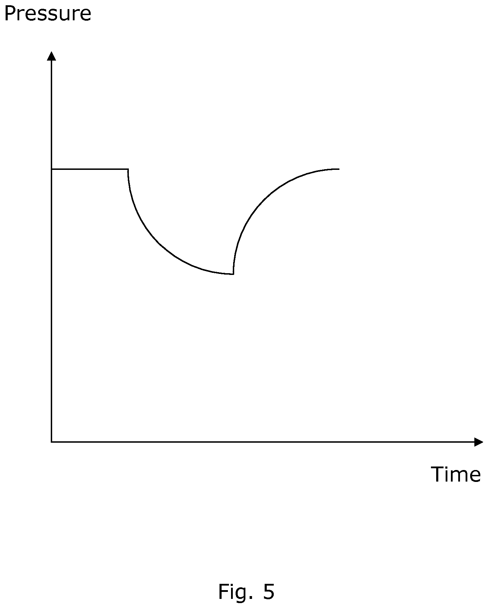

In one embodiment, the pressure drop of the fluid coming from the accumulator is measured, as shown in Fig. 5, and after measuring the pressure drop, the pressure is increased to the level above the operation pressure before draining the accumulator of fluid during testing.

In another embodiment, the pressure is increased before the draining takes place, thereby initiating the testing procedure, and when the accumulator test has been performed, the pressure is increased again until it reaches the operation pressure. By increasing the pressure before testing, it may be easier to detect a small leakage in the accumulator. In this embodiment, the testing unit 7 comprises a fluid tank and the system pump is activated to increase the pressure. In another embodiment, the testing unit does not comprise a fluid tank and the pump uses the tank of the pitch system when increasing the pressure.

As can be seen in Fig. 3, the manifold comprises an additional valve 15 arranged downstream of the throttle 14. The additional valve 15 may be activated to allow the hydraulic fluid to run to the tank 25. The tank 25 may be arranged in the hub 8 or in the nacelle 11.

Before testing each of the manifold accumulators, a test of the common accumulator is performed. This is done by a testing unit of one of the manifolds or by a separate testing unit fluidly connected with the common accumulator. The testing procedure is the same as the procedure mentioned above, and the individual manifold accumulators are only tested if the common accumulator is tested fit to run. If the pressure drop is too high, i.e. if the pressure is too low when the predetermined period of time has passed, and the common accumulator needs to be replaced, the wind turbine is not stopped, but a signal is sent or an alarm is activated to ensure that the common accumulator is replaced as soon as possible.

When testing an accumulator, the fluid is drained to the system tank through a throttle 14 or the like flow restriction means. In one embodiment, the initial pressure is determined, and after a time period of e.g. 10 seconds, the pressure is determined again. In this way, a pressure drop over a period of time can be calculated, and the calculated pressure drop is then compared with level values determining whether the pressure drop is too high or too low. In this embodiment, the testing unit 7 comprises a timer and a pressure determining instrument.

In another embodiment, the pressure is increased to 30-100 bars above the operation pressure in the hydraulic system, and the testing unit disconnects the manifold accumulator. Then the accumulator is drained from fluid and how long time it takes for the pressure to drop from the increased pressure to the operation pressure is measured. Based upon other testing values, the control system evaluate whether the accumulator is efficient enough to operate, should be replaced in the near future or if the wind turbine needs to be stopped in order to avoid damages on the pitch system or other related components.

The system accumulator may be fluidly connected to all the manifolds 4 and therefore does not need to be fluidly connected to the manifold when the manifold accumulator is to be tested. In another embodiment, the common accumulator has to be fluidly connected to a manifold 4 when the accumulator of that manifold is to be tested.

In the event that a manifold accumulator is to be replaced and can no longer be used, the common accumulator or system accumulator can act as that manifold accumulator, which increases the operating time of the wind turbine 3 since it does not have to stop. Then, the damaged manifold accumulator can be changed by the service personnel without stopping the wind turbine.

In another embodiment, the hydraulic pitch system 1 has an additional accumulator, meaning that there are two more accumulators than rotor blades. By having this second system accumulator, the pitch system 1 is able to test even though one manifold accumulator has been replaced with a system accumulator.

The testing unit 7 may comprise a temperature measuring instrument 20 or another measuring instrument. The other measuring instrument may replace the pressure measuring instrument or be comprised as an additional measuring instrument. In this way, the measuring instrument may measure any kind of property in the hydraulic fluid, such as the viscosity, flow, velocity, gas/liquid amount, density, temperature or pressure. The testing unit 7 may also be able to measure the presence of gas in the fluid in order to detect a leakage of gas in the accumulator.

The temperature measuring instrument 20 may be a hotwire anemometer, and the flow or velocity measuring instrument may be a sonic anemometer. Being able to measure the temperature enables detection of defective electrical components disposing effect in the fluid before any damage occurs in the components of the wind turbine 3. In the same way, defective components disposing fragments in the fluid in the hydraulic pitch system 1 can be detected before any damage occurs in the components of the wind turbine 3.

In another embodiment, the measuring instrument is positioned outside the wall of the manifold accumulator to measure on the inside of the accumulator by means of an ultrasonic sensor.

The control system of the testing unit 7 may monitor whether the measurements are within a predetermined parameter range, and if it detects that a measured value is outside the predetermined parameter range, it sends a signal to the operator to activate an alarm device.

The control system may also send a signal to the testing unit 7 to test the same accumulator again to verify that the accumulator is not just temporally outside the predetermined range.

The control system 9 may also comprise a plotter device (not shown) for continuously plotting the measurements performed by the testing unit 7. When the service personnel are servicing the wind turbine 3, they can read the results and evaluate if any of the accumulators have a declining trend to predict when the next accumulator needs to be replaced.

The valves 13, 15 in the testing unit 7 may be any kind of valve able to regulate the flow to prevent the fluid from flowing between the cylinder 5 and the accumulator 6. The valves 13, 15 may be operated manually and/or electronically by the control system. Furthermore, the valves may be activated if the pressure in the accumulator drops too much to start the test.

The accumulator may be any kind of accumulator, such as a bladder accumulator, a piston accumulator, a diaphragm accumulator or a metal bellow accumulator.

In one embodiment, the system accumulator is so large that it is able to absorb the fluctuations of all three manifolds, thereby enabling simultaneous testing of all three manifold accumulators.

By a wind turbine is meant any kind of apparatus able to convert wind power into electricity, such as a wind generator, a wind power unit (WPU) or a wind energy converter (WEC).

Although the invention has been described in the above in connection with preferred embodiments of the invention, it will be evident for a person skilled in the art that several modifications are conceivable without departing from the invention as defined by the following claims.

## Claims

1. A hydraulic pitch system (1) for pitching a blade (2) of a wind turbine (3) by means of a hydraulic fluid, comprising:
- a manifold (4) comprising:
- a hydraulic cylinder (5) for adjusting a pitch angle of the blade (2), and
- an accumulator (6) hydraulically connected to the cylinder (5),
the hydraulic fluid having at least one measurable property, and
a testing unit (7) adapted to measure at least one property of the hydraulic fluid in fluid communication with the accumulator (6) **characterised in that** the hydraulic pitch system (1) comprises a system accumulator (12) which replaces the accumulator (6) of the manifold (4) during measuring of the property in relation to that accumulator (6) of the manifold (4).

2. A hydraulic pitch system (1) according to claim 1, wherein the testing unit comprises a flow constriction means (14), such as a flow control valve, a throttle, a nozzle, a check valve or the like means.

3. A hydraulic pitch system (1) according to claim 1 or 2, wherein the testing unit (7) comprises a control system (9) for monitoring measurements.

4. A hydraulic pitch system (1) according to any of the preceding claims, wherein the testing unit (7) comprises a pressure measuring instrument (20).

5. A hydraulic pitch system (1) according to any of the preceding claims, further comprising a system accumulator or common accumulator (12).

6. A hydraulic pitch system (1) according to any of the preceding claims, further comprising a means for disconnecting the accumulator (6) and connecting another accumulator.

7. A hydraulic pitch system (1) according to any of the preceding claims, wherein the property of the fluid is pressure, temperature, viscosity, flow or mass.

8. A hydraulic pitch system (1) according to any of the preceding claims, wherein the testing unit (7) measures the property during operation of the wind turbine (3).

9. A hydraulic pitch system (1) according to claim 1, wherein the system accumulator (12) replaces a first accumulator of a first manifold during testing of the first manifold accumulator, and the system accumulator (12) subsequently replaces a second accumulator of a second manifold during testing of the second manifold accumulator, and so forth.

10. A hydraulic pitch system (1) according to any of the preceding claims, wherein the testing unit (7) measures the property of the fluid which is connected with the system accumulator (12).

11. A hydraulic pitch system (1) according to any of the preceding claims, wherein the testing unit (7) measures the property of the hydraulic fluid in fluid communication with the manifold accumulator during a start-up procedure of the wind turbine.

12. A hydraulic pitch system (1) according to any of the preceding claims, wherein the system accumulator (12) is fluidly connected to the manifold (4) and a valve (13) is actuated to stop the flow to the accumulator (6) when testing the accumulator (6).

13. A wind turbine (3) comprising a hydraulic pitch system (1) according to any of the preceding claims.

14. A method for measuring the property of the hydraulic fluid in fluid communication with the accumulator (6) of the manifold (4) of the hydraulic pitch system (1) according to any of the claims 1-12, comprising the steps of:
- disconnecting the accumulator (6) from the hydraulic system of the manifold (4) during operation of the wind turbine,
- connecting the system accumulator (12) with the hydraulic system of the manifold, and
- measuring an initial first fluid pressure and a second fluid pressure after a predetermined period of draining the accumulator (6), or measuring a period of time where the fluid pressure drops to a predetermined pressure while the accumulator (6) is being drained.

## Patentansprüche

1. Hydraulisches Winkelverstellsystem (1) zur Winkelverstellung eines Blattes (2) einer Windturbine (3) mithilfe eines hydraulischen Fluids, umfassend:
- einen Verteiler (4), umfassend:
- einen hydraulischen Zylinder (5) zum Einstellen eines Neigungswinkels des Blattes (2) und
- einen hydraulisch an den Zylinder (5) angeschlossenen Akkumulator (6), wobei das hydraulische Fluid mindestens eine messbare Eigenschaft aufweist, und eine Prüfeinheit (7), die zum Messen mindestens einer Eigenschaft des hydraulischen Fluids in Fluidverbindung mit dem Akkumulator (6) angepasst ist, **dadurch gekennzeichnet, dass** das hydraulische Winkelverstellsystem (1) einen Systemakkumulator (12) umfasst, der den Akkumulator (6) des Verteilers (4) während der Messung der Eigenschaft in Bezug auf diesen Akkumulator (6) des Verteilers (4) ersetzt.

2. Hydraulisches Winkelverstellsystem (1) nach Anspruch 1, wobei die Prüfeinheit ein Durchflussverengungsmittel (14) wie ein Durchflussregelventil, eine Drosselklappe, eine Düse, ein Sperrventil oder ähnliche Mittel umfasst.

3. Hydraulisches Winkelverstellsystem (1) nach Anspruch 1 oder 2, wobei die Prüfeinheit (7) ein Steuerungssystem (9) zur Überwachung der Messungen umfasst.

4. Hydraulisches Winkelverstellsystem (1) nach einem der vorstehenden Ansprüche, wobei die Prüfeinheit (7) ein Druckmessgerät (20) umfasst.

5. Hydraulisches Winkelverstellsystem (1) nach einem der vorstehenden Ansprüche, das weiter einen Systemakkumulator oder einen gewöhnlichen Akkumulator (12) umfasst.

6. Hydraulisches Winkelverstellsystem (1) nach einem der vorstehenden Ansprüche, das weiter ein Mittel zum Trennen des Akkumulators (6) und Anschließen eines anderen Akkumulators umfasst.

7. Hydraulisches Winkelverstellsystem (1) nach einem der vorstehenden Ansprüche, wobei die Eigenschaft des Fluids Druck, Temperatur, Viskosität, Fluss oder Masse ist.

8. Hydraulisches Winkelverstellsystem (1) nach einem der vorstehenden Ansprüche, wobei die Prüfeinheit (7) die Eigenschaft während des Betriebs der Windturbine (3) misst.

9. Hydraulisches Winkelverstellsystem (1) nach Anspruch 1, wobei der Systemakkumulator (12) einen ersten Akkumulator eines ersten Verteilers während der Prüfung des ersten Verteiler-Akkumulators ersetzt und der Systemakkumulator (12) nachfolgend einen zweiten Akkumulator eines zweiten Verteilers während der Prüfung des zweiten Verteiler-Akkumulators usw. ersetzt.

10. Hydraulisches Winkelverstellsystem (1) nach einem der vorstehenden Ansprüche, wobei die Prüfeinheit (7) die Eigenschaft des Fluids misst, das mit dem Systemakkumulator (12) verbunden ist.

11. Hydraulisches Winkelverstellsystem (1) nach einem der vorstehenden Ansprüche, wobei die Prüfeinheit (7) die Eigenschaft des hydraulischen Fluids in Fluidverbindung mit dem Verteiler-Akkumulator während eines Inbetriebnahmeverfahrens der Windturbine misst.

12. Hydraulisches Winkelverstellsystem (1) nach einem der vorstehenden Ansprüche, wobei der Systemakkumulator (12) in Fluidverbindung mit dem Verteiler (4) steht und ein Ventil (13) betätigt wird, um den Fluss zum Akkumulator (6) bei der Prüfung des Akkumulators (6) zu stoppen.

13. Windturbine (3), die ein hydraulisches Winkelverstellsystem (1) nach einem der vorstehenden Ansprüche umfasst.

14. Verfahren zum Messen der Eigenschaft des hydraulischen Fluids in Fluidverbindung mit dem Akkumulator (6) des Verteilers (4) des hydraulischen Winkelverstellsystems (1) nach einem der Ansprüche 1-12, das folgende Schritte umfasst:
- Trennen des Akkumulators (6) vom hydraulischen System des Verteilers (4) während des Betriebs der Windturbine,
- Anschließen des Systemakkumulators (12) an das hydraulische System des Verteilers und
- Messen eines anfänglichen, ersten Fluiddrucks und eines zweiten Fluiddrucks nach einer vorbestimmten Drainagezeit des Akkumulators (6) oder Messen eines Zeitraums, in dem der Fluiddruck während der Drainage des Akkumulators (6) auf einen vorbestimmten Druck abfällt.

## Revendications

1. Système de calage hydraulique (1) pour le calage d'une pale (2) d'une éolienne (3) à l'aide d'un fluide hydraulique, comprenant :
- un collecteur (4) comprenant :
- un vérin hydraulique (5) pour ajuster un angle de calage de la pale (2), et
- un accumulateur (6) connecté par voie hydraulique au vérin (5),
le fluide hydraulique présentant au moins une propriété mesurable, et une unité de test (7) adaptée pour mesurer au moins une propriété du fluide hydraulique en communication fluidique avec l'accumulateur (6), **caractérisé en ce que** le système de calage hydraulique (1) comprend un accumulateur de système (12) qui remplace l'accumulateur (6) du collecteur (4) pendant la mesure de la propriété par rapport à cet accumulateur (6) du collecteur (4).

2. Système de calage hydraulique (1) selon la revendication 1, dans lequel l'unité de test comprend un moyen d'étranglement de flux (14) tel qu'un clapet de régulation d'écoulement, une soupape, une buse, un clapet antiretour ou des moyens similaires.

3. Système de calage hydraulique (1) selon la revendication 1 ou 2, dans lequel l'unité de test (7) comprend un système de commande (9) pour surveiller des mesures.

4. Système de calage hydraulique (1) selon l'une quelconque des revendications précédentes, dans lequel l'unité de test (7) comprend un instrument de mesure de pression (20).

5. Système de calage hydraulique (1) selon l'une quelconque des revendications précédentes, comprenant en outre un accumulateur de système ou accumulateur commun (12).

6. Système de calage hydraulique (1) selon l'une quelconque des revendications précédentes, comprenant en outre un moyen pour déconnecter l'accumulateur (6) et connecter un autre accumulateur.

7. Système de calage hydraulique (1) selon l'une quelconque des revendications précédentes, dans lequel la propriété du fluide est la pression, la température, la viscosité, le flux ou la masse.

8. Système de calage hydraulique (1) selon l'une quelconque des revendications précédentes, dans lequel l'unité de test (7) mesure la propriété pendant le fonctionnement de l'éolienne (3).

9. Système de calage hydraulique (1) selon la revendication 1, dans lequel l'accumulateur de système (12) remplace un premier accumulateur d'un premier collecteur pendant le test du premier accumulateur de collecteur, et l'accumulateur de système (12) remplace ensuite un second accumulateur d'un second collecteur pendant le test du second accumulateur de collecteur et ainsi de suite.

10. Système de calage hydraulique (1) selon l'une quelconque des revendications précédentes, dans lequel l'unité de test (7) mesure la propriété du fluide qui est connecté à l'accumulateur de système (12).

11. Système de calage hydraulique (1) selon l'une quelconque des revendications précédentes, dans lequel l'unité de test (7) mesure la propriété du fluide hydraulique en communication fluidique avec l'accumulateur de collecteur pendant une procédure de démarrage de l'éolienne.

12. Système de calage hydraulique (1) selon l'une quelconque des revendications précédentes, dans lequel l'accumulateur de système (12) est connecté fluidiquement au collecteur (4) et un clapet (13) est actionné pour arrêter le flux vers l'accumulateur (6) lors du test de l'accumulateur (6).

13. Eolienne (3) comprenant un système de calage hydraulique (1) selon l'une quelconque des revendications précédentes.

14. Procédé de mesure de la propriété du fluide hydraulique en communication fluidique avec l'accumulateur (6) du collecteur (4) du système de calage hydraulique (1) selon l'une quelconque des revendications 1 à 12, comprenant les étapes de :
- déconnexion de l'accumulateur (6) du système hydraulique du collecteur (4) pendant le fonctionnement de l'éolienne,
- connexion de l'accumulateur de système (12) avec le système hydraulique du collecteur, et
- mesure d'une première pression de fluide initiale et d'une seconde pression de fluide après une période prédéterminée de drainage de l'accumulateur (6), ou mesure d'une période de temps où la pression de fluide chute à une pression prédéterminée alors que l'accumulateur (6) est en cours de drainage.
